# EUROPEAN PATENT SPECIFICATION

(11) **EP 2 163 577 B1**
(45) Date of publication and mention of the grant of the patent: **15.08.2012**
(21) Application number: 08016250.6
(22) Date of filing: 15.09.2008
(51) Int. Cl.: C08K 5/353, C08K 5/1539, C08J 3/22, B29C 44/34, B29C 44/50, B29C 47/12, B29C 47/30

(54) **Chain-extenders and foamed thermoplastic cellular materials obtained by reactive extrusion process and with help of said chain-extenders**
Kettenverlängerer und durch reaktives Extrudierverfahren und mithilfe dieser Kettenverlängerer erhaltene geschäumte, thermoplastische, zelluläre Materialien
Allongeurs de chaînes et matériaux cellulaires thermoplastiques en mousse obtenus par un procédé d'extrusion réactif et avec l'aide des dits allongeurs de chaînes

(43) Date of publication of application: 17.03.2010
(73) Proprietor: Armacell Enterprise GmbH, 48153 Münster (DE)
(72) Inventor: Li, Jie, Dr., 4800 Zofingen (CH); Gräter, Horst, Dr., 48155 Münster (DE)
(74) Representative: von Füner, Nicolai

(56) References cited:
- EP-A- 0 382 487
- WO-A-00/73379
- WO-A-95/09884
- WO-A-2006/122896
- GB-A- 1 320 519
- US-A- 3 658 973
- US-A- 4 284 596
- US-A- 5 693 681
- US-A- 5 807 932
- US-A1- 2006 211 843
- DATABASE WPI Week 198750 Thomson Scientific, London, GB; AN 1987-353217 XP002512916 -& JP 62 257930 A (TEIJIN LTD) 11 October 1987 (1987-10-11)
- J. SCHEIRS AND T. E. LONG EDS.: "Modern Polyesters: Chemistry and Technology of Polyesters and Copolyesters" 2003, JOHN WILEY & SONS , XP002522241 * Chapter 14 * * paragraph 2.1 and in particular the last two sentences on page 501; paragraph 11.6 *

## Description

### Background of Invention

Upgrading or improvement of PET resin by using chain-extenders such as compounds of tetracarboxylic dianhydrides with 2 or more acid anhydride groups per molecule can be traced back to 70s (or earlier) till 90s [1-6]. In the upgrading processes, low molecular polyester is processed together with multifunctional anhydrides as chain-extender/- brancher by extrusion. In [1-2] for instance, it is reported that PET resin having an intrinsic viscosity of 0.67 dl/g was blended with 0.3 wt% pyromellitic dianhydride in an extruder and extruded to a parison which was blow-molded into a clear bottle, wherein the melt strength of PET was obviously increased: No parison sag was observed and the intrinsic viscosity of the walls of the bottles was increased to 0.86 dl/g.

Another way to obtain high-viscosity PET materials, which can be for example afterwards processed by means of the conventional foam extrusion, can be accomplished through solid state polymerization (ssp) of low-viscosity PET resins (I.V. below 0.8 dl/g). This kind of upgrading process is, however, a complicated and highly cost-/time-consuming procedure: after a pre-drying, the low-molecular PET resins are compounded with chain-extending or branching additives in an extrusion line. The compound is cooled down and pelletized. The compound granulates then have to undergo a process of solid state polycondensation, wherein the materials are treated by an inert gas or in vacuum both at 170-230°C in a reactor, until the intrinsic viscosity of polyester reaches a value higher than 0.8 dl/g, preferably 1.25 dl/g [3-6]. The upgraded PET resins could be later foam extruded with help of a conventional process.

However, Smith, H.V., et al., [7] pointed out that reaction of PET with dianhydrides, particularly pyromellitic dianhydride, is effective in raising the intrinsic viscosity, but the fact of raising the viscosity of PET by reacting it with PMDA is not sufficient to ensure an adequate melt strength in the polymer for applications such as extrusion blow-molding or foam extrusion. Smith, H.V., et al., [7] have surprisingly found that PET composition having a clearly improved melt strength can be provided by the reaction of PET with copolymers of maleic anhydride (0.1 to 0.5 wt%), optionally together with pyromellitic dianhydride (0.05 to 0.5 wt%).

The chain extension mechanism [18], wherein the PET hydroxyl end group attacks the anhydride functional group of PMDA, leads to coupling between PET an PMDA, thus forming two carboxyl groups. The resulting carboxyl groups react again with PET and introduce more coupling and/or branching reactions which produce however a molecule of water in each stage of the reaction. As PMDA belongs to tetracarboxylic anhydrides, each molecule of PMDA is in position to join four molecules of PET. Thus, a typical reaction would be a complete connection of the four PMDA functional groups with four PET molecules. Other cases include heavy branching and cross-linking reaction, wherein two or more PMDA molecules are linked together to form a network. The water molecules generated during coupling reactions initiate further hydrolytic reactions, generating even more free carboxyl end groups. The PMDA concentration and the reaction time are the main factors which determine the blocking, coupling and branching reactions.

A very interesting invention was disclosed by [8], wherein the use of a mixture comprising a tetracarboxylic dianhydride and sterically hindered hydroxyphenylalkylphosphonic acid ester or half ester was invested, for increasing the molecular weight of polyesters and polyester recyclates. In the given examples, the influence of tetracarboxylic dianhydride and sterically hindered hydroxyphenylalkylphosphonic acid ester or half ester on molecular weight of PET resin was clearly illustrated. The examples of 5-8 show for instance the recipes prepared at Brabender kneader, whereas PET was Eastman Kodapak 7352, the tetracarboxylic dianhydride are presented by PMDA and BTDA and Irganox 1425 is a sterically hindered hydroxyphenylalkylphosphonic acid ester.

The results in Tab. 1 demonstrate that a total amount of 0.5 part additive (either tetracarboxylic dianhydride or sterically hindered hydroxyphenylalkylphosphonic acid ester or half ester) added to 100 part polyester increases the I.V. of the polyester compound, a combination of both additives at the same total amount achieves even a better improvement. The best improvement can be accomplished by combining PMDA and Irganox 1425 as modifier for polyester. Similar results of upgrading PET resins with help of tetracarboxylic dianhydride combined with sterically hindered hydroxyphenylalkylphosphonic acid ester or half ester were shown also in other examples of same patent [8]. The mixture of tetracarboxylic dianhydride and sterically hindered hydroxyphenylalkylphosphonic acid ester or half ester is charged to the polyester material at the start of heating. According to the patentees, said mixture in combination with polyethylene wax is a preferred form of addition, especially when using the metal salts of the phenol.

**Tab. 1: Increase in molecular weight of polyester [8]**

| Sample No. | PET 7352 (part) | PMDA (part) | BTDA (part) | Irganox 1425* (part) | I.V. (dl/g) |
|---|---|---|---|---|---|
| 1 | 100 | - | - | - | 0.40 |
| 2 | 100 | 0.5 | - | - | 0.46 |
| 3 | 100 | - | 0.5 | - | 0.48 |
| 4 | 100 | - | - | 0.5 | 0.53 |
| 5 | 100 | 0.25 | - | 0.25 | 0.64 |
| 6 | 100 | - | 0.25 | 0.25 | 0.58 |

| | | | | | |
|---|---|---|---|---|---|
| *: Irganox 1425 is now called as Irgamod 195 by Ciba | | | | | |

Based on the increased molecular weight and improved melt strength of low viscous PET resins by adding tetracarboxylic dianhydride, this kind of additives was applied in reactive extrusion to foam PET resin, either through directly incorporation or in form of concentrate.

As described in the inventions [4-5, 11], tetracarboxylic dianhydride, which is capable of chain-extending or branching polyester, can be fed into the polyester extrusion line directly or as a pre-dried mixture through the hopper. However, an incorporation of such reactive additives in the form of powder directly into extrusion line can result in the formation of gels or material appearance of a fluid-like state by fluidization (air flow in powder) in the feeding zone of an extruder [10]. The fluidization interferes with an effective and consistent conveying of solid state raw materials in extruder. Second of all, the solid powder may affect a well dispersive mixing of additives with polyester melt. [12] confirmed large variation in product quality during such PET foam extrusion of more than an hour. Instability of the process was indicated, as per [9], by the fact that the extruder torque and pressure were observed to double or halve without any change in process settings. The inherent viscosity of samples exhibited similar wide fluctuations.

These factors resulted in PET foams with large density and microstructure inconsistencies. The patentees of [12] were unable to attribute these inconsistencies to feeder variations, moisture effects or equipment variations.

To reduce or eliminate the instability problems of reactive foam extrusion, a direct adding of such chain-extending/branching additives by side feeding was introduced in [16]. Another alternative is use of a concentrate (masterbatch) recommended for example by [12-14], obtained by melt processing the multifunctional chain-extending/branching compound containing tetracarboxylic dianhydride and a carrier polymer. The concentrate is then mixed at given levels with the polyester in an extruder (preferably twin-screw extruder) to get PET resin foamed in a stable process.
[12] disclosed that incorporation of a concentrate, comprising PET as carrier material and pyromellitic dianhydride, into a PET compound containing also the same multifunctional chain-extender/brancher was able to stabilize the reactive extrusion process of PET foaming. The examples 1 and 2 of [12] illustrated that the process oscillations (screw torque and die pressure) could be dramatically reduced by employing said concentrate instead of direct incorporation of the necessary additives.

However, employment of PET as carrier material and chain-extender/-brancher leads to an upgrading reaction of PET resin already at preparation stage which is generally a melt blending process. To avoid or limit such chain-extending/branching reaction of PET at the preparation process, 1 to about 50 wt% of chain-extender/-brancher such as multifunctional carboxylic anhydrides or polyols could be compounded with 50 to 99 wt% of polyolefin polymer (ethylene or propylene polymers) to provide concentrates which were used for PET foam extrusion as per [13]. The polyolefin contained in the concentrate is also beneficial for improving the impact properties of the polyester.

In addition to the above invention, PET foam sheet produced by extrusion processing of PET/PE blend exhibits an improved thermoformability as disclosed by [15], whereas 2-4 wt% polyolefin (LLDPE) in combination with 0.6 wt% sterically hindered phenolic antioxidant (Ethanox 330) was added to PET recipe, which was foam extruded to a thin cellular sheet by injecting nitrogen as inert blowing agent. This thin cellular sheet was thermoformed into trays with further reduced density utilizing a standard thermoformer. The density of trays was even 15% less than the cellular sheets. PET foam modified by polyolefin provides therefore a better flexural and impact properties according to [13,15]. The patentees of [14] believed that the use of the polyester resins for the preparation of the concentrates, however, does not eliminate the reactions that bring about the formation of gels; instead, the application of the polyolefins involves the possibility of degradation of the same at the working temperature of the polyester resins. [14] disclosed that the addition to the aromatic polyester resins of multifunctional compounds chosen from the of tetracarboxylic dianhydrides in the form of concentrates in polycarbonate resins not only avoided the formation of gels and the instability of the extrusion process, but also remarkably improved the rheological characteristics of the resin, in particular the melt strength and the intrinsic viscosity etc.

PET foam is currently mainly used as trays in food industry or as core material in a sandwich structure of wind turbine rotors. In such applications, the properties like light weight, thermal insulation, high temperature resistance and outstanding mechanical properties are the primary reasons for foaming of PET resin. Uncrosslinked PET foams due to their fully recyclability are occupying wider public acceptance. For such applications, foamed cellular polyester products for said applications are supposed to provide sufficient mechanical strength (tensile and compression strength for instance) on one hand. Flexural and impact properties are required on other hand.

To meet such requirements on cellular polyester materials, it is obvious that extrusion foaming of PET resin with help of chain-extenders/branches alone would not be satisfactory enough. Beside a stable and consistent foam extrusion process, which ensures a polyester foam with a consistent quality, modification of PET resins is also necessary. The overall objective of this invention is to develop recipes and foam extrusion processes for producing of PET cellular materials for above mentioned applications, whereas concentrates containing multifunctional chain-extenders/branchers are applied for increase of melt strength of PET resin during a reactive foam extrusion. A chain extender composition for polyester is disclosed in WO-A-2006122896.

### Description of Invention

The starting point of this invention was an analysis of polyester upgrading resulted from use of different effect materials or their mixtures which may enhance the melt strength of polyester and improve the polyester foaming process. This analysis built the fundament of a formulation of concentrates used for reactive PET foam extrusion.

A subject matter of the present invention is a concentrate useful as chain-extending/branching agent comprising a thermoplastic carrier material, an anhydride, a sterically hindered phenolic antioxidant and an oxazoline.

### Description of Drawings

- Fig. 1:: Sterically hindered hydroxyphenylalkylphosphonic acid ester or half ester.
- Fig. 2:: Sterically hindered phenolic antioxidant: 4-((3,5-bis((4-hydroxy-3,5-ditert-butyl-phenyl)methyl)-2,4,6-trimethyl-phenyl)methyl)-2,6-ditert-butyl-phenol.
- Fig. 3:: Alternative sterically hindered phenolic antioxidants.
- Fig. 4:: 1,3-phenyl bisoxazoline and 1,4-phenyl bisoxazoline.
- Fig. 5:: Phosphite esters as thermal stabilizer.
- Fig. 6:: The torque of recipe trials (example 1-5) with Haake Polydrive kneader.
- Fig. 7:: The torque of recipe trials (example 1,2 and 6-9) with Haake Polydrive kneader

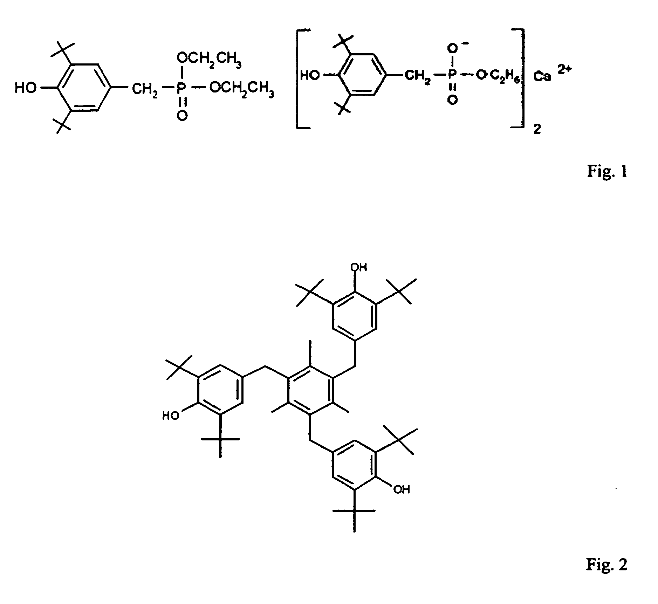

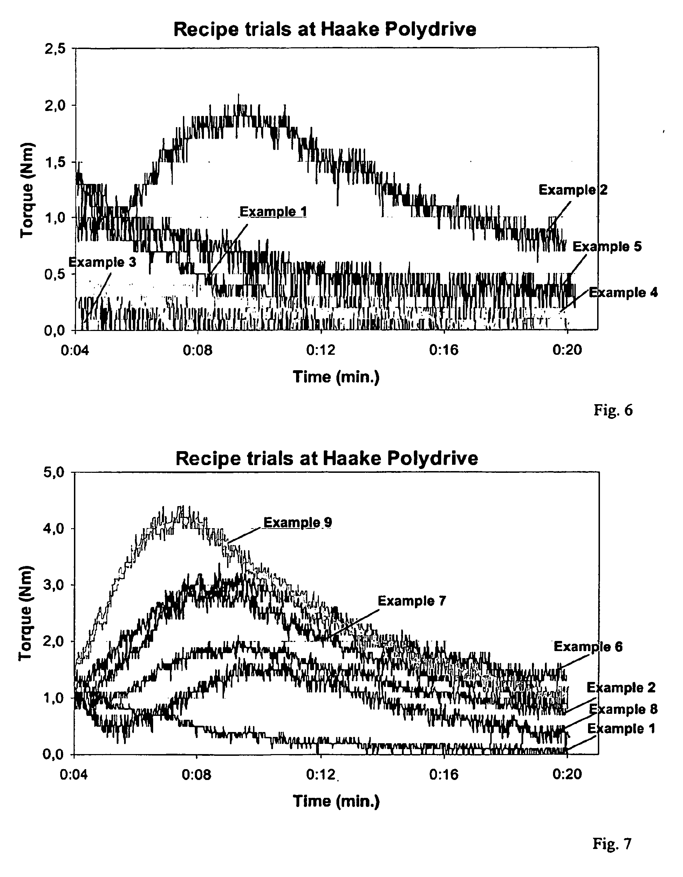

In contrast to [8], it has been found in this invention that antioxidant comprising a sterically hindered hydroxyphenylalkylphosphonic acid ester or half ester (s. Fig. 1) as an additive alone is not able to increase the molecular weight of polyester, but a decrease of molecular weight and melt strength of PET was observed (s. Fig. 6). On the other hand, this invention confirmed that the use of a mixture comprising a tetracarboxylic dianhydride and a sterically hindered hydroxyphenylalkylphosphonic acid ester or half ester increases the molecular weight and therefore the melt strength of polyesters at a heating and shearing process (s. example 6 of Fig. 7).

Moreover, it has been found that the antioxidant comprising sterically hindered phenolic end groups (s. Fig 2) in combination with a tetracarboxylic dianhydride led to a significant increase of molecular weight of polyester during the heating and mixing process, as such a mixture also enhanced the melt strength of polyester remarkably (s. example 7 of Fig. 7). This trial illustrated that a combination of a sterically hindered phenols and a tetracarboxylic dianhydride ensures an effective increase in molecular weight of polyesters and provides a melt strength enhancer for melt processes.

The chain extension mechanism of the sterically hindered phenols is not quite clear. Probably, the functional phenolic end group act as hydrogen donor, wherein radical scavenger neutralizes the alcoxy or peroxy radicals generated by hydrolytic or thermal degradation, thus terminates the chain propagation of degradation processes. The hydrolytic degradation may be caused by the moisture contained in the polyester resin or generated during the chain extension reactions of tetracarboxylic dianhydrides with polyester as described in [18]. By adding sterically hindered phenols, the effectiveness of functional anhydride groups remain, therefore, intact for further upgrading reactions.

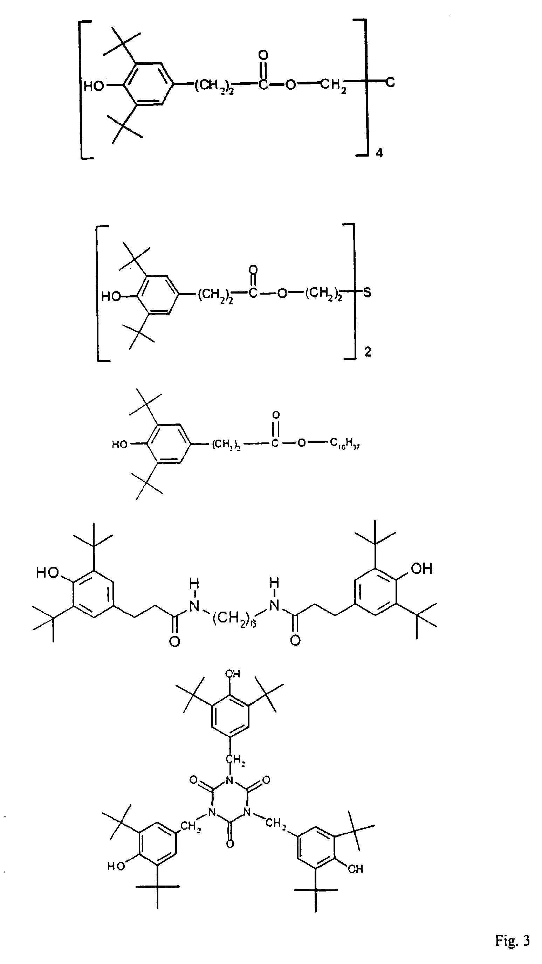

Beside above mentioned antioxidants, particularly suitable sterically hindered phenolic antioxidants selected from the group of so-called primary antioxidants include for instance (s. Fig. 3): Pentaerythritol tetrakis(3-(3,5-di-tert-butyl-4-hydroxyphenyl)propionate), thiodiethylene bis[3-(3,5-di-tert-butyl-4-hydroxyphenyl)propionate], octadecyl-3-(3,5-ditert.butyl-4-hydroxyphenyl)-propionate, N,N'-hexane-1,6-diylbis(3-(3,5-di-tert-butyl-4-hydroxyphenylpropionamide)), 1,3,5-tris(3,5-di-tert-butyl-4-hydroxybenzyl)-1,3,5-triazine-2,4,6(1H,3H,5H)-trione.

Particularly preferred sterically hindered phenolic antioxidant is selected from hydroxyphenyle propionate and hydrobenzyl groups such as: 4-((3,5-bis((4-hydroxy-3,5-ditert-butyl-phenyl)methyl)-2,4,6-trimethyl-phenyl)methyl)-2,6-ditert-butyl-phenol or calcium bis(monoethyl(3,5-di-tert-butyl-4-hydroxylbenzyl)phosphonate).

The tetracarboxylic dianhydride (0.05 - 1.0 wt%) used in this invention is selected from a group containing at least two phthalic anhydride per molecule such as pyromellitic dianhydride, benzophenone dianhydride, 2,2-bis (3,4-dicarboxyphenyl) propane dianhydride, 3,3', 4,4'-biphenyltetracarboxylic acid dianhydride, bis (3,4-dicarboxyphenyl) ether dianhydride, bis (3,4-dicarboxyphenyl) thioether dianhydride, bisphenol A bisether dianhydride, 2,2-bis (3,4-dicarboxylphenyl) hexafluoropropane dianhydride, 2,3,6,7-naphtalene-tetracarboxylic acid dianhydride, bis (3,4-dicarboxyphenyl) sulfone dianhydride, 1,2,5,6-naphthalene-tetracarvoxylic acid dianhydride, 2,2',3,3'-biphenyltetracarvoxylic acid dianhydride, hydroquinone bisether dianhydride, bis (3,4-dicarboxyphenyl) sulfoxide dianhydride, 3,4,9,10-perylene tetracarboxylic acid dianhydride and blends thereof.

Preferred tetracarboxylicdianhydrides are those containing aromatic rings.

Particularly preferred tetracarboxylic dianhydrides are pyromellitic dianhydride, 3,3', 4,4'benzophenonetetracarboxylic acid dianhydride and mixtures thereof.

The most preferred tetracarboxylic dianhydride is pyromellitic dianhydride (PMDA).

Furthermore, it has been found that addition of an oxazoline into a mixture comprised of sterically hindered phenolic antioxidant and tetracarboxylic dianhydride resulted in an dramatic upgrading of polyester melt within a certain time frame during the thermal and mixing process and the melt strength of polyester melt remained high, while an oxazoline alone or a mixture of oxazoline and a tetracarboxylic dianhydride, thus without use of a sterically hindered phenolic antioxidant, shows in terms of polyester upgrading even a worse performance than application of tetracarboxylic dianhydride as chain-extender/brancher.

Concentrates comprised of this formulation comprised of sterically hindered phenolic antioxidant, tetracarboxylic dianhydride and oxazoline can be used for foam extrusion of polyesters. It has been surprisingly discovered in the current invention that addition of such concentrates into a twin screw extruder led to a reduction of melt pressure at extruder exit by around 20-40% on one hand (s. Tab. 5). On the other hand, the mechanical testing of foamed polyester samples showed that compression strength of polyester foam was up to 60% higher in the perpendicular direction of extrusion than one of application of concentrates without the component of oxazoline, while the compression value of oxazoline-containing foamed samples is still higher than one of oxazoline-free polyester foam. This means that, by applying oxazoline, an improvement of mechanical stiffness, a better isotropy of foam extrudates and an increase in extrusion throughput can be expected. Besides, the cell structure of polyester foam modified by oxazoline was further improved and very fine cells could be obtained.

The reaction mechanism of oxazoline combined with a sterically hindered phenolic antioxidant and a tetracarboxylic dianhydride is not clear and needs to be further investigated.

Preferred oxazoline is the monooxazoline for instance 2-, 3- or 4-oxazoline as well as bisoxazoline.

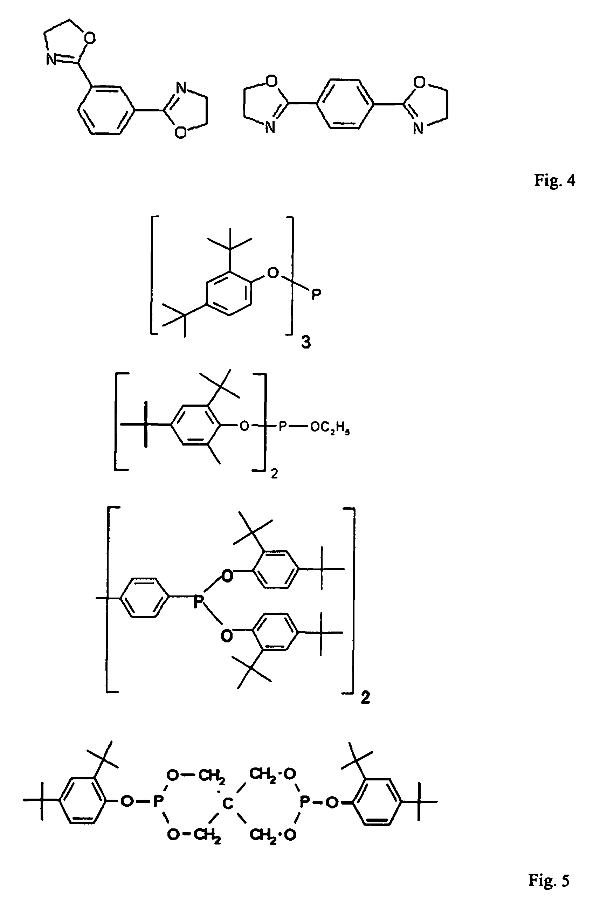

Particularly preferred bisoxazoline is 1,3-phenyl bisoxazoline and 1,4-phenyl bisoxazoline (s. Fig. 4).

Mixtures of different oxazoline can be applied in the concentrate recipes.

Trioxazoline can be alternatively integrated into the recipe of said concentrates.

The invention refers thus to the application of concentrates comprising 0.5-20wt% tetracarboxylic dianhydride and 0.5-20wt% sterically hindered phenolic antioxidant or alternatively sterically hindered hydryoxyphenylalkylphosphonic acid ester or half ester to increase the molecular weight and enhance the melt strength of polyesters or polyester blends.

Preferably, 0.5-15wt% oxazoline can be added into the composition of the chain-extending/branching concentrates.

50-99 wt% carrier materials are needed for an effective dispersive and distributive mixing of said concentrates at further polymer processes.

The concentrates are prepared by melt blending said additives and carrier materials such as polyester or blend of polyester/polyolefin by well known means, preferably melt extrusion, until a homogeneous compound is obtained.

The main application of said concentrates can be seen in polyester foam extrusion process, but also in other processes of thermoplastic polymers.

The tetracarboxylic dianhydride, the sterically hindered phenolic antioxidant or sterically hindered hydryoxyphenylalkylphosphonic acid ester or half ester and the oxazoline are used as chain-extending/branching components to give polyesters of higher molecular weight and to improve thus the foamability of low viscous polyester, while polyesters as carrier material contribute to a better dispersive and distributive mixing.

In case of an use of polyester/polyolefin blend in said concentrates, the polyolefin can stabilize the preparation and foam extrusion process or positively modify the impact properties of final foamed cellular polyester materials. The thermoformability can be improved additionally.

In the current invention, it turned, in addition, out that, up to certain percentage in final foamed polyester products, application of polypropylene as blend partner in the concentrate exhibits a higher glass transition temperature and improves the flexural properties of polyester foam materials in comparison to chain-extending/branching concentrate containing polyethylene as blend partner, wherein the concentrate preparation process is, however, still stable.

The secondary (preventive) antioxidants react with hydroperoxide decomposer and hydrolysis without producing radicals. In this way, a degradating chain branching initiated by hydroperoxides is reduced, possible upgrading reactions of tetracarboxylic dianhydrides with polyesters can be limited or terminated. Representative for this group of antioxidants is typically phosphites, which consume hydroperoxides and result in formation of phosphates before hydroperoxides decompose into free radicals [19]. In addition, by adding phosphites, phenols of the primary antioxidants can remain intact and ensure a long-term thermal stability even after the final further polymer process. Phosphites are considered as an effective processing stabilizer and achieve synergy in combination with sterically hindered phenols.

Therefore, a certain amount of phosphite ester selected from the group of so-called secondary antioxidants in combination with hindered phenol formulates a phenol-phosphite synergy and serves as thermal stabilizer for polymer processes. This phenol-phosphite synergy can be applied to prevent carrier material such as polyester or polyolefin from chemical reaction with chain-extenderlbrancher or to reduce this kind of chemical reaction during concentrate preparation process, which is mostly a blending process by melt extrusion. With help of such thermal stabilizer, no polyester gel was detected during said preparation process. The quantity of organophosphorus thermal stabilizer must be limited to avoid the potential danger that the residue interferes with the melt strength enhancing reaction of polyester at the final foam extrusion process.

The preferred content of phenol-phosphite compound is 0.1 - 0.3 wt% in the concentrate formulation. The preferred ratio of a phenol-phosphite formulation is 20:80 per weight.

To possible thermal stabilizers belong for example (s. Fig 5): Tris(2,4-ditert-butylphenyl) phosphite, tris(nonylphenyl)phosphite, tetrakis(2,4-di-tert-butylphenyl)-1,1-biphenyl-4,4'-diylbisphosphonite, Bis(2,4-di-tert-butylphenyl) pentaerythritol diphosphite, bis(2,4-ditert-butyl-6-methyl-phenyl) ethylphosphite, bis(2,6-diter-butyl-4-methylphenyl) pentaerythritol-diphosphite.

The phenolic counterpart of organophosphorus thermal stabilizer can be selected from the antioxidants described above. Particularly preferred combinations are a blend of phenol-phosphite synergy: 20wt% Octadecyl-3-(3,5-di-tert.butyl-4-hydroxyphenyl)-propionate + 80wt% tris(2,4-ditert-butylphenyl) phosphite and 20wt% tentaerythritol tetrakis(3-(3,5-ditert-butyl-4-hydroxyphenyl)propionate) + 80wt% tris(2,4-ditert-butylphenyl) phosphite. Furthermore, the invention relates to preparation and application of nucleation agent in form of a concentrate which contains 1 - 45 wt% talc and 55 - 99 wt% polyester, preferably 5 - 30 wt% talc and 70 - 95 wt% PET. High percentage of talc in form of powder is able to be embedded into the carrier material by using a dosing unit equipped with a powder feeder. The incorporation of talc powder takes place preferably by side adding talc into an extruder after the feeding zone at a port where the polyester is already molten and the melt pressure is as low as one of atmosphere.

It has been detected that the amount of nucleate changes even for production of polyester foam with same density, when injecting different gas type into extruder. Depending on the type of blowing agent, an individual percentage of the nucleate compound should be dosed into the extruder on one hand. Using a nucleate in form of concentrate, a stable extrusion process is provided without any feeding problems on the other hand. Beside talc, alternative nucleate types can be used as well.

Further nucleates are TiO₂, MgO, BaSO₄, SiO₂, Al₂O₃, CdO, ZnO, mica fuller's earth, diatomaceous earth or the like. The particle size of said nucleates is about below 100 microns, wherein 95 wt% of the particles have a size about 10 microns.

To prepare the chain-extending/branching concentrate or nucleation compound, use of a co-rotating twin screw extruder is preferred, but a counter-rotating twin screw extruder can be alternatively applied either. Use of a single screw extruder is also possible.

The developed concentrates can be applied in blow molding or sheet extrusion for thermoforming, but the main application of said concentrates is found in reactive foam extrusion to process a wide range of polyesters. Preferred polyesters for production of final products or concentrate preparation include those derived from terephthalic acid, isophthalic acid, naphthalenedicarboxylic acid, cyclohexanedicarboxylic acid and the like or the alkyl esters. Particularly preferred is DMT- or PTA-based PET with I.V.=about 0.5 - 1.5 dl/g (according to ASTM 4603) including homo- and copolymer. Alternatively, polyester blends comprised of polyester/polyolefin (eg. PET/LLDPE, PET/LDPE or PET/PP), polyester/polyester (PET/PBT, PET/PEN, PET/PC), polyester/styrene polymer (PET/SAN, PET/SEBS), polyester/high temperature thermoplastics etc. can be processed with help of or to prepare the invented concentrates.

The polyolefin useful for the final products or acting as blend partner in the concentrates are selected from a) ethylene polymers having a melt flow rate of about 0 to about 100 at 190°C. (according to ISO 1133) and b) propylene polymers, 1-butene polymers and copolymers of propylene and/or 1-butene having a melt flow rate of about 0 to about 100 at 230°C (according to ISO 1133).

In the reactive extrusion processes to produce low density cellular foams, a physical blowing agent is required to be used for foaming (often referred to as "gas") and is typically carbon dioxide (CO₂), Nitrogen (N₂), alcohols, ketons, methyl formate, hydrofluorocarbon (for example HFC-152a or HFC-134a), a hydrocarbon (such as n-hexane, iso- or n-pentane, cyclopentane and n-heptane), or a gas mixture thereof. It has been found in this invention that, due to its compatibility to polyester [17], cyclopentane exhibits an improved solubility into the polyester melt and, therefore, can be applied to produce foamed cellular materials with very low density.

Beside nucleation and blowing agents, it is also possible to employ flame retardants such as halogenated, charforming (like phosphorus-containing) or water-releasing compounds, charforming and water-releasing compounds and UV stabilizers in the recipes.

The process for foaming polyester is generally foam extrusion, wherein an extrusion line is used. The extrusion line for the reactive extrusion foaming of polyester consists basically of an extruder, dosing equipment, gas injector, heat exchanger, static mixer and die for extrudate shaping. The extrusion line is followed by downstream equipment such as puller, conveying rolls with air cooling, sawing unit, further cooling and grinding and packaging etc. All types of foaming extruders can be used for the reactive foam extrusion in the current invention: single screw or co-/counter-rotating twin screw extruder, tandem extrusion line consisting of a primary extruder (twin or single screw extruder) and a secondary/cooling single screw extruder.

A profile die annular die, multihole die and block die can be applied in this invention to form an extrudate to a required final shape at the foam extrusion. A profile die is used to produce foamed PET product with profiled cross-section. To produce a cellular plate or board by PET foam extrusion, an annular, multihole or block die is employed. The multihole and block die are generally needed for thick boards (thickness bigger than 10mm), while the annular die is preferred to produce thin-wall foamed sheet (thickness smaller than 10mm).

A multihole die, also called strand die, consists of a divergent adapter and a multihole plate. The adapter connected to one of the units extruder, static mixer or heat exchanger acts as a melt distributor with a divergent flow channel, which transforms the melt from round/restiform to rectangular extrudate. The divergent adapter is followed by the multihole plate with orifices distributed at the whole exit area. The multihole plate provides a high enough resistance to the flow of a gas-charged melt to avoid a too early foaming inside the die or extruder and divides the rectangular extrudate into filaments (strands), which experience an expansion after leaving the multihole plate and are shaped through a following calibrator. Die hole configuration and distance between holes of the multihole plate are designed mainly based on the expansion ratio of gas-charged melt and the min. melt pressure which is necessary to prevent a too early foaming.

The block die alternatively used in this invention for the reactive foam extrusion differs from the flat die of traditional polymer extrusion. The block die for PET foam extrusion features a flow channel which is similar to one of the above mentioned divergent adapter. The restrictor and triangle zone for flow adjustment are abdicated, while the flow is adjusted for an uniform distribution along the exit width and the resistance is built up by using a adjustable upper or lower lip at the die exit, because with the flexible lip, the lip gap can be influenced.

### Examples of the invention

This invention is illustrated by the following examples which are given for purpose of illustration.

### Example 1-9

The recipe trials which were a pre-investigation of influence of additives on melt strength were performed with help of a Haake Polydrive kneader. The PET resin containing IPA used in the trials was a copolymer with an intrinsic viscosity of 0.79 dl/g. The multifunctional chain-extenderlbrancher was pyromellitic dianhydride (Thermo Fisher) and 1,3-Phenylenebisoxazoline (Evonik). The antioxidants as stabilizer utilized in this invention were calcium bis(monoethyl(3,5-di-tert-butyl-4-hydroxylbenzyl)phosphonate) (Irgamod 195, a sterically hindered hydroxyphenylalkylphosphonic acid ester or half ester. Irgamod 195 used to be called Irganox 1425 according to the supplier Ciba) and 4-((3,5-bis((4-hydroxy-3,5-ditert-butyl-phenyl)methyl)-2,4,6-trimethyl-phenyl)methyl)-2,6-ditert-butyl-phenol (Irganox 1330, a sterically hindered phenolic antioxidant, identical to Ethanox 330, Alvinox 100). The applied bisoxazoline was 1,3-phenyl bisoxazoline (1,3 PBO) of Evonik. The recipes of example 1-9 are listed as following:

**Tab. 2: Recipes of kneader trials**

| Example No. | PET (weight part) | PMDA (weight part) | Irgamod 195 (weight part) | Irganox 1330 (weight part) | 1,3 PBO (weight part) |
|---|---|---|---|---|---|
| 1 | 100 | - | - | - | - |
| 2 | 100 | 0.3 | - | - | - |
| 3 | 100 | - | 0.3 | - | - |
| 4 | 100 | - | - | 0.3 | - |
| 5 | 100 | - | - | - | 0.3 |
| 6 | 100 | 0.3 | 0.1 | - | - |
| 7 | 100 | 0.3 | - | 0.1 | - |
| 8 | 100 | 0.3 | - | - | 0.1 |
| 9 | 100 | 0.3 | - | 0.1 | 0.1 |

Prior to the recipe trials, PET resin was dried at 170°C for 8h and pre-mixed with said additives. The mixture was dried at 80°C for 3h under vacuum. The Haake kneader was heated to 280°C and filled with the PET compounds described in Tab. 02. The filling and melting time took totally about 4 minutes. Over a periode of 20 minutes the kneader trial was running at 45 rpm. The blade torque recorded during the kneader testings and illustrated in Fig. 6 and Fig. 7 represents the melt strength, therefore the change in molecular weight of polyester.

Fig. 6 shows that addition of antioxidants Irgamod 195 or Irganox 1330 alone (example 3 and 4) into PET resin could not increase the torque, but decreased it a little, while mixing of 1,3 PBO (example 5) or PMDA (example 2) with PET experienced a higher torque of kneader blades and therefore an improved the melt strength. PMDA particularly enhances the melt strength very much according to Fig. 6.

In combination with antioxidants Irgamod 195 or Irganox 1330 (s. Fig. 7), PMDA was able to remarkably increase the torque (example 6 and 7), wherein the compound PMDA and Irgamod 195 presented a little better performance (example 6) in comparison to PMDA and Irganox 1330 combination. However, the compound of PMDA and 1,3 PBO (example 8) delivered a decreased melt strength in contrast to additive with only PMDA as chain-extender/brancher. A compound of PMDA, 1,3 PBO and antioxidant Irganox 1330 enhances the melt strength of PET extremely at beginning phase of chain-extending reaction (example 9) and the torque is afterwards still higher than example 7, which stands for a formulation of PMDA and Irganox 1330 as additives.

### Example 10

PET copolymer (I.V. =0.67 dl/g) was dried at 170°C for 8h and continuously conveyed to the hopper of a co-rotating twin screw extruder. With help of this compounding extruder, a high percentage (15 - 40 wt%) of talc (Plustalc from Omya) in form of powder was embedded into PET melt by using a dosing unit equipped with a powder feeder. The incorporation of talc powder took place preferably by side adding talc into an extruder after the feeding zone at a port where the polyester is already molten and the melt pressure was possibly as low as one of atmosphere (decompression zone).

The extrudates in form of strand were cooled down in a water-bath und granulated to granulate or chips by means of a palletizing unit. The granulates were dried immediately in a centrifuge dryer and packed.

### Example 11

Granulate of PET copolymer (I.V.=0.78 dl/g) was dried at 170°C for 8h and continuously fed together with 5-10 wt% PMDA (CA from Lonza), 1-4 wt% Irganox 1330 (from Ciba) and 0.05-0.3 wt% Irganox B900 (from Ciba) into a co-rotating twin screw with φ45mm. The weight percentage of each component is related to the total composition of the concentrate. Irganox 1330 and B900 were dried at 80°C for 4h. The compound was extruded, cooled down in a water bath, palletized and dried immediately in a centrifuge dryer.

The process parameters were:
Speed of the screw: 100-600 rpm
Barrel temperatures: 275-290°C
Throughput: 80-120 kg/h.

The melt pressure was in range of 40-60bar at the extruder head and no gel was found at the melt blending process. These results demonstrated that no significant reaction of PMDA with polyester took place in compounding extruder.

### Example 12

The procedure of Example 11 was repeated with the difference that a PET/LDPE blend as carrier material was process instead of PET copolymer. The PET/LDPE blend is comprised of 30-50 wt% PET copolymer (I.V.=0.78 dl/g) and 30-60 wt% LDPE (density=0.926 kg/m³ according to ISO 1183 and MFR=1.5 g/10min according to ISO 1133) based on the total composition of the concentrate.

The melt pressure was in range of 40-60bar at the extruder head and no gel was found at the melt blending process. These results demonstrated that no significant reaction of PMDA with polyester took place in compounding extruder, as mentioned in example 12.

### Example 13

The procedure of Example 11 was repeated with the difference that a PET/PP blend as carrier material was applied instead of PET copolymer. The PET/PP blend is comprised of 30-50 wt% PET copolymer (I.V.=0.78 dl/g according) and 30-60 wt% PP copolymer (density=0.905 kg/m³ according to ISO 1183 and MFR=2.0 g/00min according to ISO 1133) based on the total composition of the concentrate.

The melt pressure was in range of 40-60bar at the extruder head and no gel was found at the melt blending process.

### Example 14

The procedure of Example 12 was repeated by adding 0.5-3.0 wt% 1,3 PBO (from Evonik) into the formulation of PET/LDPE blend. The weight percentage of 1,3 PBO is related to the composition of the concentrate.

The melt pressure was in range of 40-60bar at the extruder head and no gel was found at the melt blending process.

### Example 15

The procedure of Example 12 was repeated with the difference that a) a PC/LDPE blend as carrier material was used instead of the PET/LDPE blend and b) the primary and secondary antioxidants were replaced too: Instead of Irganox 1330 and B900, Irgamod 195 and Irganox B561 (from Ciba) were implemented in the concentrate formulation.

The PC/LDPE blend is comprised of 30-50 wt% PC (Calibre™ 603-3 of Dow Chemicals) and 30-60 wt% LDPE (density=0.926 kg/m³ according to ISO 1183 and MFR=1.5 g/10min according to ISO 1133) based on the total composition of the concentrate. The concentrate contained 5-10 wt% PMDA (CA from Lonza), 1-4 wt% Irgamod 195 and 0.05-0.3 wt% Irganox B561 in the composition.

The melt pressure was in range of 40-60bar at the extruder head and no gel was found at the melt blending process.

### Example 16

PET copolymer (I.V.=0.78) was dried at 170°C for 8h and mixed, using a concrete mixer, with the concentrates of Example 10 and 11 at a certain ratio, so that the final composition of the mixture is effectively comprised of 0.3 wt% PMDA, 0.07 wt% Irganox 1330 and 0.3 wt% talc.

The PET mixture was fed manually into a single screw extruder (φ45mm and L/D=30 from Maplan Schwerin GmbH) followed by a rod die with the bore of φ5mm and L=1.6D and extruded. For foaming, iso-pentane was injected into the melting zone of the extruder. The process parameters are summarized in Tab. 3:

**Tab. 3: Process parameters**

| Feature | Parameter |
|---|---|
| Temperature of feeding zone (°C) | 270-285 |
| Temperature of melting zone (°C) | 275-290 |
| Temperature of metering zone (°C) | 275-285 |
| Temperature of die (°C) | 280-290 |
| Screw rotating speed (1/min) | 32 |
| Melt throughput (kg/h) | 12-14 |
| Gas injection (g/min) | 6.0 |

The foamed extrudate, which showed an expansion of about 5 times of die bore, was cooled down by air and pulled to a sawing unit to be cut.

The extruded PET foam with a fine and uniform cell structure was obtained. The foam density was 130-190 kg/m³.

### Example 17

The foam extrusion of Example 16 was repeated with the difference that the chain-extending concentrate of Example 12 instead of Example 11 was mixed with other components. The LDPE content was effectively 2.0 wt% in the final composition of PET foam extrusion, while the content of other additives remained as same as in Example 16. A PET foam with a fine and uniform cell structure was obtained. The foam density was 130-190 kg/m³.

### Example 18

The recipe of Example 17 was repeated with the difference that the blowing agent was a cyclopentane instead of iso-pentane. Another difference in comparison to Example 17 can be seen in the extrusion line. A co-rotating twin screw extruder followed by a Sulzer mixer and a strand die was applied instead of the single screw extruder with the rod die.

The co-rotating twin screw extruder (FG75 manufactured by Fagerdala) featured a screw diameter of φ75mm and L/D=32, while the forming tooling was a strand die consisting of 74 orifices distributed on the exit area of 67.5×35.5mm. The foam extrudate underwent a calibration after leaving the strand die to be shaped to a rectangular board.

The PET resin was pre-dried at 170°C for 8h and the concentrates of Example 10 and 12 at 80°C for 4h. The PET resin and the concentrates were separately fed into the twin screw extruder by individual dosing units. The process parameters are listed in Tab. 4:

**Tab. 4: Process parameters**

| Feature | Parameter |
|---|---|
| Temperature of feeding zone (°C) | 265-275 |
| Temperature of melting zone (°C) | 275-285 |
| Temperature of metering zone (°C) | 275-285 |
| Temperature of Sulzer mixer (°C) | 275-285 |
| Temperature of die (°C) | 285-290 |
| Screw rotating speed (1/min) | 10-11 |
| Melt throughput (kg/h) | 45 |
| Gas injection (g/min) | 17 |

The obtained PET foam showed a fine and uniform cell structure. The pressure at the strand die and the foam properties are given in Tab. 5.

### Example 19

The foam extrusion of Example 18 was repeated with the difference that the chain-extending concentrate of Example 14 was incorporated into the twin screw extruder instead of Example 12. The 1,3 PBO content was effectively 0.07 wt% in the final composition of PET foam extrusion, while the content of other additives remained as same as in Example 18.

The PET foam with an even better cell structure could be obtained.

The melt pressure at the die was lower than one of Example 18, but the mechanical properties showed a better isotropy in comparison to Example 18. A comparison is illustrated in Tab. 5:

**Tab. 5: Comparison of Example 18 and 19**

| Feature | Example 18 | Example 19 |
|---|---|---|
| Melt pressure at die (bar) | 140 | 110 |
| Foam density (kg/m³) | 102 | 103 |
| Compression strength at extrusion direction (MPa) | 1.17 | 1.20 |
| Compression strength at perpendicular direction (MPa) | 0.39 | 0.54 |

The compression strength of foamed samples was determined according to ISO 844.

### Example 20

The foam extrusion of Example 18 was repeated with the difference that the chain-extending concentrate of Example 15 was incorporated into the twin screw extruder instead of Example 12, wherein 2.0 wt% LDPE and 1.8 wt% PC were effectively represented in the final formulation.

A PET foam with a fine and uniform cell structure was obtained.

### Example 21

The foam extrusion of Example 18 was repeated with the difference that a) a bigger twin screw extruder (screw diameter φ180mm) was applied, b) a higher percentage talc was totally implemented in the formulation and c) the amount of the injected gas was increased to produce a low density PET foam.

The extruder used in this example was BC180, a co-rotating twin-screw extruder (from BC Foam) with Dₘₐₓ=180mm and Length=28D. The twin-screw extruder was attached with a static mixer, the extrusion tooling (strand die) consisted of a divergent adapter and a multihole plate with orifice configuration and distance of Example 18. The foamed extrudate was formed in a calibrator and cooled down. The added nucleate concentrate contained effectively 0.65 wt% talc related to the final formulation of PET recipe. The relevant process parameters can be seen in Tab 6:

**Tab. 6: Process parameters**

| Feature | Parameter |
|---|---|
| Temperature of feeding zone (°C) | 265-280 |
| Temperature of melting zone (°C) | 270-285 |
| Temperature of metering zone (°C) | 255-275 |
| Temperature of static mixer (°C) | 250-265 |
| Temperature of strand die (°C) | 270-290 |
| Screw rotating speed (1/min) | 10-11 |
| Throughput (kg/h) | 350 |
| Gas injected (g/min) | 210 |
| Gas content (wt%) | 3.6 |

PET foam with density of 68 kg/m³ was obtained. The foam featured a fine and uniform cells structure.

### Example 22

The foam extrusion of Example 21 was repeated with the difference that a) the type and amount of the injected gas was changed, b) the quantity of talc was decreased and c) the concentrate of Example 11 was used instead of Example 12. In place of cyclopentane, a hydrofluorocarbon HFC-152a in quantity of 100 g/min was injected into the twin screw extruder BC180. The PET composition is effectively comprised of 96.25 wt% PET copolymer, 0.24 wt% talc and 0.35 wt% PMDA.

PET foam of density of 112 kg/m³ and with a fine and uniform cell structure was obtained. The mechanical properties are described in Tab. 7.

### Example 23

The foam extrusion of Example 22 was repeated with the difference that the chain-extending concentrate of Example 13 was added into the recipe instead of Example 11 and the quantity of talc as nucleate was reduced. The recipe of PET foam is effectively comprised of 3.0 wt% PP in the final composition. The PET composition is effectively comprised of 96.4 wt% PET copolymer, 3.0 wt% PP copolymer, 0.24 wt% talc and 0.35 wt% PMDA.

The properties of obtained fine and uniform PET foam are compared with ones of Example 22 and given in Tab. 7:

**Tab. 7: Property comparison of Example 22 and Example 23**

| Feature | Example 22 | Example 23 |
|---|---|---|
| Foam density (kg/m³) | 112 | 108 |
| Compression strength at extrusion direction (MPa) | 1.51-1.56 | 1.53 |
| Shear strength according to ASTM C 273 (MPa) | 1.04-1.15 | 1.05-1.12 |
| Shear elongation at break according to ASTM C 273 (%) | 5.8-7.1 | 11.6-13.5 |

Tab. 7 shows an improved flexibility of PET foam from the recipe containing PP, while the mechanical stiffness and strength remained nearly unchanged for PET foams obtained by using both concentrates.

### Literature

1. Leslie, John P., et al, US4,145,466 (1979)
2. Leslie, John P., et al, US4,176,101 (1979)
3. Phobos N.V., et al., EP0422282 (1989)
4. Al Ghatta, H., et al., WO9312164 (1992)
5. Al Ghatta, H., et al., EP0866089 (1992)
6. Sublett, B.J., WO9502623 (1993)
7. Smith, H. V., et al., EP0475142 (1991)
8. Pfaendner, R., et al., US5,593,681 (1997)
9. Zweifel, H., Plastics Addtives Handbook, Hanser Publishers, Munich, 5th ed., (2001)
10. VDI-Gesellschaft Kunststofftechni, Der Doppelschneckenextruder, VDI-Verlag GmbH, Dusseldorf, (1998)
11. Hayashi, M., et al., EP 0372846 (1989)
12. Rotter, G.E., et al., US 5,288,764 (1993)
13. Kemani, K.C., et al., WO9509884 (1994)
14. Al Ghatta, H., et al., EP0801108 (1997)
15. Cheung, T.M., et al., EP 0390 723 (1990)
16. Li, J., et al., European Patent Application No. 08005196.4 (2008)
17. Faridi, N., et al., Solubility Measurements of Blowing Agents in Polyethylene Terephthalate, Journal of Cellular Plastics, Vol. 43, (July/Sept. 2007)
18. Awaja, F., et al., Recycled Poly(ethylene terephthalate) Chain Extension by a Reactive Extrusion Process, Polymer Engineer and Science, Vol. 44, No.8, (Aug. 2004)
19. Gächter, R., et al., Taschenbuch der Kunststoff-Additive, Carl Hanser VErlang München Wien (1989).

## Claims

1. A concentrate useful as chain-extending/branching agent comprising a thermoplastic carrier material, an anhydride, a sterically hindered phenolic antioxidant and an oxazoline.

2. The concentrate according to claim 1 useful as chain-extending/branching agent comprising 59 to 99, preferably 79 to 99 weight percent of a thermoplastic carrier material, 1 to 30, preferably 1 to 20 weight percent of anhydride, 0.05 to 30, preferably 0.5 to 15 weight percent of sterically hindered phenolic antioxidant and 0.05 to 20, preferably 0.5 to 15 weight percent of oxazoline.

3. The concentrate according to claims 1 or 2, wherein the thermoplastic carrier material is a polyester or a polymer blend containing more than 2.0 weight percent of polyester.

4. The concentrate according to claim 3, wherein the polyester is a polyethylene terephthalate homo- or copolymer having an intrinsic viscosity of 0.5 - 1.5 dl/g according to ASTM 4603.

5. The concentrate according to claim 3, wherein one polymer blend partner is a polyolefin selected from
a. ethylene polymers having a melt flow rate of 0 to 100 at 190°C according to ISO 1133 and
b. propylene polymers, 1-butene polymers and copolymers of propylene and/or 1-butene having a melt flow rate of 0 to 100 at 230°C according to ISO 1 1133.

6. The concentrate according to anyone of claims 1 to 3, wherein the anhydride is a compound with 2 or more acid anhydride groups per molecule, preferably a tetracarboxylic dianhydride, more preferably a pyromellitic dianhydride (PMDA).

7. The concentrate according to claims 1, 2 or 3, wherein the oxazoline is a monooxazoline or bisoxazoline or trioxazoline or mixture thereof, wherein preferably the bisoxazoline is selected from
a. 1,3-phenyl bisoxazoline (1,3 PBO) and
b. 1,4-phenyl bisoxazoline (1,4 PBO).

8. The concentrate according to anyone of claims 1 to 3, wherein the sterically hindered phenolic antioxidant is selected from sterically hindered phenols of hydroxyphenyl propionate or hydrobenzyl groups.

9. The concentrate according to claim 8, wherein the sterically hindered phenolic antioxidant is 4-((3,5-bis((4-hydroxy-3,5-ditert-butyl-phenyl)methyl)-2,4,6-trimethylphenyl)methyl)-2,6-ditert-butyl-phenol.

10. A process for the preparation of the concentrate according to anyone of claims 1 to 9 comprising melt blending the thermoplastic carrier material with said additives by using a secondary preventive antioxidant or a mixture of the secondary antioxidant and sterically hindered phenols, preferably at 0.05 to 0.3 weight percent, based on the concentrate composition, acting as process stabilizer during the extrusion.

11. The process according to claim 10, in which the secondary antioxidant is an organophosphorus compound with the formula P(OR)₃, wherein R contains aromatic rings.

12. An extrusion process for production of a foamed cellular material comprising the steps of
a. feeding 92 to 98 weight percent polyester resin, 1 to 10 weight percent of chain-extending concentrate comprising a thermoplastic carrier material, an anhydride, a sterically hindered phenolic antioxidant and an oxazoline and 0.1 to 3 weight percent of nucleate concentrate comprising polyester as thermoplastic carrier material and talc, preferably 60 to 95 weight percentage of polyester as thermoplastic carrier material and 5 to 40 weight percentage of talc into an extruder;
b. injecting/dosing and mixing a blowing agent with the molten polymer system in the extruder,
c. cooling and further homogenizing the polymer melt through a heat exchanger and/or a static mixer,
d. extruding the melt mixture through a shaping die, which can be selected from a profile, annular, multihole strand or block die for a required final extrudate,
e. shaping the extrudate with help of a calibrator whose shape and dimension are fixed or adjustable and
f. air cooling the extrudate after calibration.

13. The process according to claim 12, in which the polyester resin is polyethylene terephthalate homo- or copolymer of I.V.=0.5 - 1.5 dl/g, according to ASTM 4603, for alternatively a polymer blend with more than 2.0 weight percent of polyester.

14. The process according to claims 12 or 13 wherein the chain-extending concentrate comprises 59 to 99, preferably 79 to 99 weight percent of a thermoplastic carrier material, 1 to 30, preferably 1 to 20 weight percent of anhydride, 0.05 to 30, preferably 0.5 to 15 weight percent of sterically hindered phenolic antioxidant and 0.05 to 20, preferably 0.5 to 15 weight percent of oxazoline.

15. The process according to anyone of claims 12 to 14, wherein the thermoplastic carrier material is a polyester or a polymer blend containing more than 2.0 weight percent of polyester.

16. The process according to claim 15, wherein the polyester is a polyethylene terephthalate homo- or copolymer having an intrinsic viscosity of 0.5 - 1.5 dl/g, according to ASTM 4603.

17. The process according to claim 15, wherein one polymer blend partner is a polyolefin selected from
a. ethylene polymers having a melt flow rate of 0 to 100 at 190°C, according to ISO 1133 and
b. propylene polymers, 1-butene polymers and copolymers of propylene and/or 1-butene having a melt flow rate of 0 to 100 at 230°C, according to ISO 1133.

18. The process according to anyone of claims 12 to 15, wherein the anhydride is a compound with 2 or more acid anhydride groups per molecule, preferably a tetracarboxylic dianhydride, more preferably a pyromellitic dianhydride (PMDA).

19. The process according to claims 12 or 14, wherein the oxazoline is a monooxazoline or bisoxazoline or trioxazoline or mixture thereof, wherein preferably the bisoxazoline is selected from
a. 1,3-phenyl bisoxazoline (1,3 PBO) and
b. 1,4-phenyl bisoxazoline (1,4 PBO).

20. The process according to anyone of claims 12 to 15, wherein the sterically hindered phenolic antioxidant is selected from sterically hindered phenols of hydroxyphenyl propionate or hydrobenzyl groups.

21. The process according to claim 20, wherein the sterically hindered phenolic antioxidant is 4-((3,5-bis((4-hydroxy-3,5-ditert-butyl-phenyl)methyl)-2,4,6-trimethylphenyl)methyl)-2,6-ditert-butyl-phenol.

22. Process according to claim 12 wherein the blowing agent is a physical blowing agent which is cyclopentane and the polyester foam produced has density lower 200 kg/m³.

23. A foamed cellular material with density of 40 to 500 kg/m³ obtainable according to claim 12.

24. Cellular articles obtained from the foamed material of claim 23.

## Patentansprüche

1. Konzentrat zur Verwendung als Kettenverlängerungs- bzw. -verzweigungsmittel, umfassend einen thermoplastischen Trägerstoff, ein Anhydrid, ein sterisch gehindertes Antioxidans und ein Oxazolin.

2. Konzentrat gemäß Anspruch 1 zur Verwendung als Kettenverlängerungs- bzw. -verzweigungsmittel, umfassend 59 - 99, vorzugsweise 79 - 99 Gew.-% eines thermoplastischen Trägerstoffs, 1 - 30, vorzugsweise 1-20 Gew.-% eines Anhydrids, 0,05 - 30, vorzugsweise 0,5 - 15 Gew.-% eines sterisch gehinderten phenolischen Antioxidans und 0,05 - 20, vorzugsweise 0,5 - 15 Gew.-% eines Oxazolins.

3. Konzentrat gemäß den Ansprüchen 1 oder 2, wobei der thermoplastische Trägerstoff ein Polyester oder ein Polymergemisch, enthaltend über 2,0 Gew.-% Polyester, ist.

4. Konzentrat gemäß Anspruch 3, wobei der Polyester ein Polyethylenterephthalat-Homo-oder -Copolymer mit einer inneren Viskosität von 0,5 - 1,5 dl/g nach ASTM 4603 ist.

5. Konzentrat gemäß Anspruch 3, wobei eine Komponente des Polymergemisches ein Polyolefin ist, ausgewählt unter
a) Ethylenpolymeren mit einer Schmelzflussgeschwindigkeit von 0-100 bei 190 °C nach ISO 1133 und
b) Propylenpolymeren, 1-Butenpolymeren und Copolymeren von Propylen und/oder 1-Buten mit einer Schmelzflussgeschwindigkeit von 0 - 100 bei 230 °C nach ISO 1133.

6. Konzentrat gemäß einem der Ansprüche 1 - 3, wobei das Anhydrid eine Verbindung mit 2 oder mehr Säureanhydridgruppen pro Molekül, vorzugsweise ein Tetracarbonsäuredianhydrid und insbesondere ein Pyromellitsäuredianhydrid (PMDA) ist.

7. Konzentrat gemäß den Ansprüchen 1, 2 oder 3, wobei das Oxazolin ein Mono-, Bis- oder Trisoxazolin oder ein Gemisch davon ist, wobei das Bisoxazolin vorzugsweise ausgewählt ist unter
a) 1,3-Phenyl-bisoxazolin (1,3 PBO) und
b) 1,4-Phenyl-bisoxazolin (1,4 PBO).

8. Konzentrat gemäß einem der Ansprüche 1 - 3, wobei das sterisch gehinderte phenolische Antioxidans ausgewählt ist unter sterisch gehinderten Phenolen von Hydroxyphenylpropionat oder Hydrobenzylgruppen.

9. Konzentrat nach Anspruch 8, wobei das sterisch gehinderte phenolische Antioxidans 4-((3,5-Bis((4-hydroxy-3,5-ditert-butyl-phenyl)methyl)-2,4,6-trimethyl-phenyl)methyl)-2,6-ditert-butyl-phenol ist.

10. Verfahren zur Herstellung des Konzentrats gemäß einem der Ansprüche 1 - 9, umfassend das im geschmolzenen Zustand erfolgende Mischen des thermoplastischen Trägerstoffs mit den Zusätzen unter Verwendung eines sekundären bzw. präventiven Antioxidans oder eines Gemisches des sekundären Antioxidans mit sterisch gehinderten Phenolen, vorzugsweise bei 0,05 - 0,3 Gew.-%, bezogen auf die Konzentratszusammensetzung, das als Verarbeitungsstabilisator während der Extrusion dient.

11. Verfahren gemäß Anspruch 10, bei dem das sekundäre Antioxidans eine Organophosphorverbindung der Formel P(OR)₃ ist, wobei R aromatische Ringe enthält.

12. Extrusionsverfahren zur Herstellung eines geschäumten Schaumstoffs, umfassend die folgenden Stufen:
a) Zufuhr von 92 - 98 Gew.-% Polyesterharz, 1 - 10 Gew.-% des Kettenverlängerungskonzentrats, umfassend einen thermoplastischen Trägerstoff, ein Anhydrid, ein sterisch gehindertes phenolisches Antioxidans und ein Oxazolin, und 0,1 - 3 Gew.-% eines Nukleierungskonzentrats, umfassend Polyester als thermoplastischen Trägerstoff und Talk, vorzugsweise 60 - 95 Gew.-% Polyester als thermoplastischen Trägerstoff und 5 - 40 Gew.-% Talk, zu einem Extruder,
b) Einspritzung bzw. Zudosierung und Mischen eines Treibmittels mit dem geschmolzenen Polymersystem im Extruder,
c) Abkühlung und weitere Homogenisierung der Polymerschmelze über einen Wärmetauscher und/oder einen statischen Mischer,
d) Extrusion des geschmolzenen Gemisches durch eine Formdüse, die ausgewählt werden kann unter einer Profil-, Ring-, Mehrbohrungs- bzw. Strang- oder Blockdüse für das gewünschte Endextrudat,
e) Formung des Extrudats mithilfe eines Kalibrators, dessen Form und Abmessung fixiert oder einstellbar sind, und
f) Luftkühlung des Extrudats nach Kalibrierung.

13. Verfahren gemäß Anspruch 12, wobei das Polyesterharz Polyethylenterephthalat-Homo-oder -Copolymer mit einer inneren Viskosität von 0,5 - 1,5 dl/g nach ASTM 4603 oder alternativ dazu ein Polymergemisch mit mehr als 2,0 Gew.-% Polyester ist.

14. Verfahren gemäß den Ansprüchen 12 oder 13, wobei das Kettenverlängerungskonzentrat 59 - 99, vorzugsweise 79 - 99 Gew.-% eines thermoplastischen Trägerstoffs, 1 - 30, vorzugsweise 1 - 20 Gew.-% Anhydrid, 0,05 - 30, vorzugsweise 0,5 - 15 Gew.-% sterisch gehindertes phenolisches Antioxidans und 0,05 - 20, vorzugsweise 0,5 - 15 Gew.-% Oxazolin umfasst.

15. Verfahren gemäß einem der Ansprüche 12 bis 14, wobei der thermoplastische Trägerstoff ein Polyester oder ein Polymergemisch ist, das mehr als 2,0 Gew.-% Polyester enthält.

16. Verfahren gemäß Anspruch 15, wobei der Polyester ein Polyethylenterephthalat-Homo-oder -Copolymer mit einer inneren Viskosität von 0,5 - 1,5 dl/g nach ASTM 4603 ist.

17. Verfahren gemäß Anspruch 15, wobei eine Komponente des Polymergemisches ein Polyolefin ist, ausgewählt unter
a) Ethylenpolymeren mit einer Schmelzflussgeschwindigkeit von 0 - 100 bei 190 °C nach ISO 1133 und
b) Propylenpolymeren, 1-Buten-Polymeren und -Copolymeren von Propylen und/oder 1-Buten mit einer Schmelzflussgeschwindigkeit von 0 - 100 bei 230 °C nach ISO 1133.

18. Verfahren gemäß einem der Ansprüche 12-15, wobei das Anhydrid eine Verbindung mit zwei oder mehr Säureanhydridgruppen pro Molekül, vorzugsweise ein Tetracarbonsäuredianhydrid und insbesondere ein Pyromellitsäuredianhydrid (PMDA) ist.

19. Verfahren gemäß Anspruch 12 oder 14, wobei das Oxazolin ein Mono-, Bis- oder Trisoxazolin oder ein Gemisch davon ist, wobei das Bisoxazolin vorzugsweise ausgewählt wird unter
a) 1,3-Phenyl-bisoxazolin (1,3 PBO) und
b) 1,4-Phenyl-bisoxazolin (1,4 PBO).

20. Verfahren gemäß einem der Ansprüche 12 - 15, wobei das sterisch gehinderte phenolische Antioxidans ausgewählt wird unter sterisch gehinderten Phenolen von Hydroxyphenylpropionat oder Hydrobenzylgruppen.

21. Verfahren gemäß Anspruch 20, wobei das sterisch gehinderte phenolische Antioxidans 4-((3,5-Bis((4-hydroxy-3,5-ditert-butyl-phenyl)methyl)-2,4,6-trimethyl-phenyl)methyl)-2,6-ditert-butyl-phenol ist.

22. Verfahren gemäß Anspruch 12, wobei das Treibmittel ein physikalisches Treibmittel ist, das Cyclopentan darstellt, und der hergestellte Polyesterschaum eine Dichte von unter 200 kg/m³ aufweist.

23. Geschäumter Schaumstoff mit einer Dichte von 40 - 500 kg/m³, herstellbar gemäß Anspruch 12.

24. Schaumstofferzeugnisse, erhalten aus dem geschäumten Stoff gemäß Anspruch 23.

## Revendications

1. Concentré utile comme agent d'extension/ramification de chaîne comprenant un matériau thermoplastique formant support, un anhydride, un antioxydant phénolique stériquement bloqué et une oxazoline.

2. Concentré selon la revendication 1, utile comme agent d'extension/ramification de chaîne comprenant 59 à 99, de préférence 79 à 99 pour cent en poids d'un matériau thermoplastique formant support, 1 à 30, de préférence 1 à 20 pour cent en poids d'un anhydride, 0,05 à 30, de préférence 0,5 à 15 pour cent en poids d'un antioxydant phénolique stériquement bloqué et 0,05 à 20, de préférence 0,5 à 15 pour cent en poids d'oxazoline.

3. Concentré selon les revendications 1 ou 2, dans lequel le matériau thermoplastique formant support est un polyester ou un mélange de polymères contenant plus de 2,0 pour cent en poids de polyester.

4. Concentré selon la revendication 3, dans lequel le polyester est un homo ou copolymère de poly(téréphtalate d'éthylène) ayant un indice limite de viscosité de 0,5 à 1,5 dl/g, selon la norme ASTM 4603.

5. Concentré selon la revendication 3, dans lequel un partenaire du mélange de polymères est une polyoléfine choisie parmi
a. les polymères d'éthylène ayant un indice de fluidité de 0 à 100 à 190°C, selon la norme ISO 1133 et
b. des polymères de propylène, des polymères de 1-butène et des copolymères de propylène et/ou de 1-butène ayant un indice de fluidité de 0 à 100 à 230°C, selon la norme ISO 1133.

6. Concentré selon l'une quelconque des revendications 1 à 3, dans lequel l'anhydride est un composé avec 2 groupes anhydride acide ou plus par molécule, de préférence un dianhydride tétracarboxylique, plus préférablement un dianhydride pyromellitique (PMDA).

7. Concentré selon les revendications 1, 2 ou 3, dans lequel l'oxazoline est une monooxazoline ou bisoxazoline ou trioxazoline ou leurs mélanges, dans lequel de préférence la bisoxazoline est choisie parmi
a. la bisoxazoline 1,3-phénylique (1,3 PBO) et
b. la bisoxazoline 1,4-phénylique (1,4 PBO).

8. Concentré selon l'une quelconque des revendications 1 à 3, dans lequel l'antioxydant phénolique stériquement bloqué est choisi parmi les phénols stériquement bloqués de propionate d'hydroxyphényle ou de groupes hydroxybenzyliques.

9. Concentré selon la revendication 8, dans lequel l'antioxydant phénolique stériquement bloqué est le 4-((3,5-bis((4-hydroxy-3,5-ditert-butyl-phényl)méthyl)-2,4,6-triméthyl-phényl)méthyl)-2,6-ditert-butyl-phénol.

10. Procédé de préparation du concentré selon l'une quelconque des revendications 1 à 9, comprenant le mélange à l'état fondu du matériau thermoplastique formant support avec lesdits additifs en utilisant un antioxydant secondaire, préventif ou un mélange de l'antioxydant secondaire et des phénols stériquement bloqués, de préférence à un pourcentage en poids de 0,05 à 0,3, sur la base de la composition de concentré, agissant comme stabilisant de procédé durant l'extrusion.

11. Procédé selon la revendication 10, dans lequel l'antioxydant secondaire est un composé organophosphoré de formule P(OR)₃, dans lequel R contient des cycles aromatiques.

12. Procédé d'extrusion pour la production d'un matériau expansé alvéolaire comprenant les étapes de
a. alimentation de 92 à 98 pour cent en poids de résine de polyester, 1 à 10 pour cent en poids de concentré d'extension de chaîne comprenant un matériau thermoplastique formant support, un anhydride, un antioxydant phénolique stériquement bloqué et une oxazoline et 0,1 à 3 pour cent en poids de concentré de nucléation comprenant du polyester comme matériau thermoplastique formant support et du talc, de préférence 60 à 95 pour cent en poids de polyester comme matériau thermoplastique formant support et 5 à 40 pour cent en poids de talc dans une extrudeuse ;
b. injection/dosage et mélange d'un agent de soufflage avec le système polymère fondu dans l'extrudeuse,
c. le refroidissement et en outre l'homogénéisation de la masse fondue de polymère à travers un dispositif d'échange thermique et/ou un mélangeur statique,
d. l'extrusion du mélange fondu à travers une filière de mise en forme, qui peut être choisie parmi une filière de profilage, annulaire, multitrous ou une filière à tête pour un extrudat final requis,
e. la mise en forme de l'extrudat à l'aide d'un calibreur dont la forme et les dimensions sont fixes ou ajustables et
f. le refroidissement à l'air de l'extrudat après le calibrage.

13. Procédé selon la revendication 12, dans lequel la résine de polyester est un homo ou copolymère de poly(téréphtalate d'éthylène) d'indice limite de viscosité = 0,5 à 1,5 dl/g, selon la norme ASTM 4603, ou alternativement un mélange de polymères avec plus de 2,0 pour cent en poids de polyester.

14. Procédé selon les revendications 12 ou 13, dans lequel le concentré d'extension de chaîne comprend 59 à 99, de préférence 79 à 99 pour cent en poids d'un matériau thermoplastique formant support, 1 à 30, de préférence 1 à 20 pour cent en poids d'anhydride, 0,05 à 30, de préférence 0,5 à 15 pour cent en poids d'antioxydant phénolique stériquement bloqué et 0,05 à 20, de préférence 0,5 à 15 pour cent en poids d'oxazoline.

15. Procédé selon l'une quelconque des revendications 12 à 14, dans lequel le matériau thermoplastique formant support est un polyester ou un mélange de polymères contenant plus de 2,0 pour cent en poids de polyester.

16. Procédé selon la revendication 15, dans lequel le polyester est un homo ou copolymère de poly(téréphtalate d'éthylène) ayant un indice limite de viscosité de 0,5 à 1,5 dl/g, selon la norme ASTM 4603.

17. Procédé selon la revendication 15, dans lequel un partenaire du mélange des polymères est une polyoléfine choisie parmi
a. les polymères d'éthylène ayant un indice de fluidité de 0 à 100 à 190°C, selon la norme ISO 1133 et
b. des polymères de propylène, des polymères de 1-butène et des copolymères de propylène et/ou de 1-butène ayant un indice de fluidité de 0 à 100 à 230°C, selon la norme ISO 1133.

18. Procédé selon l'une quelconque des revendications 12 à 15, dans lequel l'anhydride est un composé ayant deux groupes anhydride acide ou plus par molécule, de préférence, un dianhydride tétracarboxylique, plus préférablement un dianhydride pyromellitique (PMDA).

19. Procédé selon les revendications 12 ou 14, dans lequel l'oxazoline est une monooxazoline ou bisoxazoline ou trioxazoline ou leurs mélanges, dans lequel de préférence la bisoxazoline est choisie parmi
a. la bisoxazoline 1,3-phénylique (1,3 PBO) et
b. la bisoxazoline 1,4-phénylique (1,4 PBO).

20. Procédé selon l'une quelconque des revendications 12 à 15, dans lequel l'antioxydant phénolique stériquement bloqué est choisi parmi les phénols stériquement bloqués de propionate d'hydroxyphényle ou des groupes hydrobenzyliques.

21. Procédé selon la revendication 20, dans lequel l'antioxydant phénolique stériquement bloqué est le 4-((3,5-bis((4-hydroxy-3,5-ditert-butyl-phényl)méthyl)-2,4,6-triméthyl-phényl)méthyl)-2,6-ditert-butyl-phénol.

22. Procédé selon la revendication 12, dans lequel l'agent de soufflage est un agent de soufflage physique qui est le cyclopentane et la mousse de polyester produite à une densité inférieure à 200 kg/m³.

23. Matériau expansé alvéolaire avec une densité de 40 à 500 kg/m³ pouvant être obtenu selon la revendication 12.

24. Articles expansés obtenus à partir du matériau alvéolaire selon la revendication 23.
